# EUROPÄISCHE PATENTANMELDUNG

(11) **EP 0 661 900 A2**
(43) Veröffentlichungstag der Anmeldung: **05.07.1995**
(21) Anmeldenummer: 94119420.1
(22) Anmeldetag: 08.12.1994
(51) Int. Cl.: H04Q 11/04, H04M 11/06

(54) **Einrichtung zur Steuerung von Paketdaten in einem STM-Vermittlungssystem**

(30) Priorität: 22.12.1993 DE 4343984
(71) Anmelder: SIEMENS AKTIENGESELLSCHAFT, D-80333 München (DE)
(72) Erfinder: Nagler, Werner, D-82069 Hohenschäftlarn (DE)

(57) **Zusammenfassung**

Der Paketdatendienst ist ein neuer Dienst für ISDN-Teilnehmer. Da pro Paketdatenverbindung in vielen Anwendungsfällen nur geringe Datenmengen zu übertragen sind, müssen innerhalb des STM-Netzes für nur geringe Datenmengen viele physikalische Verbindungskanäle zur Verfügung gestellt werden. Um diesen Nachteil zu vermeiden, wird erfindungsgemäß eine Paketsteuerungseinrichtung eingeführt, die Paketdaten von ISDN-Teilnehmern innerhalb des STM-Vermittlungsystems an zentraler Stelle konzentriert und an ein Paketvermittlungssystem weiterleitet bzw. vom Paketvermittlungssystem erhaltene Paketdaten auf die entsprechenden ISDN-Teilnehmer verteilt.

## Beschreibung

Der Paketdatendienst ist ein neuer Dienst für ISDN-Teilnehmer. Paketdaten werden entweder im D-Kanal oder in einem B-Kanal eines ISDN-Teilnehmers übertragen, abhängig von der Datenmenge. Eine STM-Vermittlungsstelle(Synchronous Transfer Mode Vermittlungsstelle), die diesen Dienst beinhaltet, muß dazu bei Bedarf eine Verbindung zwischen einem ISDN-Teilnehmer und einer externen Paketvermittlung herstellen und die anfallenden Paketdaten zwischen ISDN-Teilnehmer und Paketvermittlung übertragen. Dies geschieht über ganz normale 64 Kbit/sec-PCM-Kanäle.

In vielen Anwendungsfällen sind nur geringe Datenmengen pro Paketdatenverbindung zu übertragen. Da für jede Paketdatenverbindung jedoch ein separater physikalischer Kanal belegt wird, und zwar von der jeweiligen Ursprungs-STM-Vermittlungsstelle, gegebenenfalls über weitere STM-Vermittlungsstellen bis zur Paketvermittlungstelle, ist die Resourcenbelegung des STM-Netzes durch Paketdatenverbindungen im Vergleich zu den dabei übertragenen Datenmengen sehr groß.

Der Erfindung liegt die Aufgabe zugrunde, eine Einrichtung zur Steuerung von Paketdaten in STM-Vermittlungsstellen anzugeben, die das obengenannte Problem beseitigt.

Die Paketdaten werden von der erfindungsgemäßen Paketsteuerungseinrichtung auf zentraler Ebene konzentriert und verteilt. Deshalb sind nur mehr sehr wenige zentrale Leitungen bzw. physikalische Kanäle von einer STM-Vermittlunsstelle zu einer Paket-Vermittlungsstelle nötig. Da die Rahmenbearbeitungsmodule die Konzentrierungs-/ und Verteilungsfunktion der Paketsteuerungseinrichtung in eigenständiger Weise durchfuhren, ist eine leistungsfähige Paketsteuerung gewährleistet. Darüber hinaus läßt sich die Struktur der erfindungsgemäßen Paketsteuerungseinrichtung gut in ein STM-Vermittlungssystem mit zentraler Koppelnetzstruktur integrieren.

Eine Ausführungsform der Erfindung ist durch Anspruch 2 angegeben. Diese Ausführungsform hat den Vorteil, daß auch die Verbindungssteuerung der Paketdatenverbindungen erst auf zentraler Ebene durchgeführt wird.

Eine Ausführungsform der Erfindung ist durch Anspruch 3 angegeben. Bei dieser Ausführungsform gelangen Steuerungsnachrichten direkt, d.h. ohne eine Zwischenbehandlung über eine weitere zentrale Einrichtung, an den Gruppenprozessor der Paketsteuerungseinrichtung. Dies ist insbesondere für Verbindungssteuerungsnachrichten wichtig, da die Behandlung dieser Nachrichten Realzeitanforderungen unterliegt. Durch den Rechnerbus wird somit die Leistungsfähigkeit der Paketsteuerungseinrichtung wesentlich erhöht.

Eine weitere Ausführungsform der Erfindung nach Anspruch 6 hat den Vorteil, daß die Paketverbindungen bereits im Anschlußbereich der Teilnehmer vorkonzentriert werden, und daß bei Ausfall einer Paketsteuerungseinrichtung zumindest ein weiterer Datenweg über eine andere Paketsteuerungseinrichtung zur Verfügung steht.

Im folgenden wird ein Ausführungsbeispiel der Erfindung anhand der Zeichnung näher erläutert.

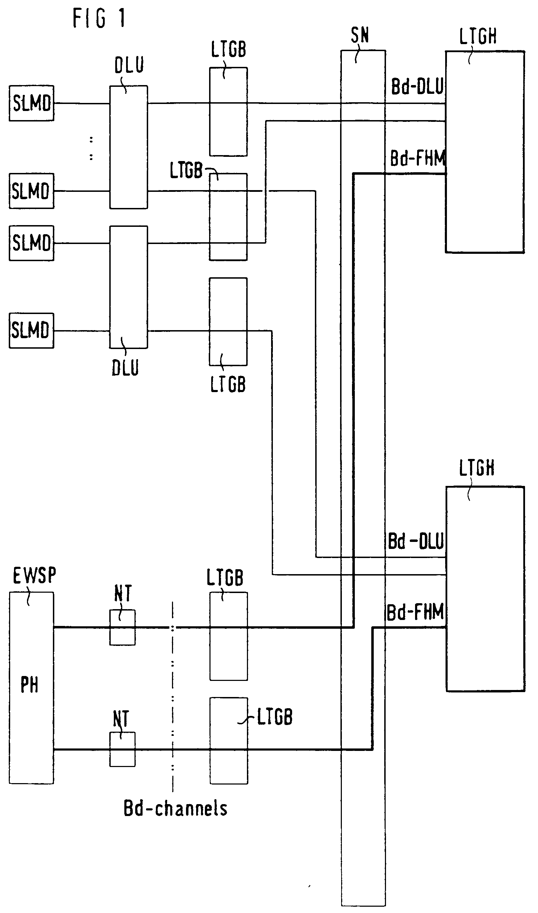

Figur 1 zeigt die Struktur eines speziellen Vermittlungssystems, nämlich des Vermittlungssystemes EWSD der Firma Siemens AG. Im Mittelpunkt dieses Systems steht ein zentrales Koppelnetz SN, an das mehrere Anschlußgruppen LTGB, sowie eine oder mehrere erfindungsgemäße Paketsteuerungseinrichtungen LTGH angeschlossen sind. An eine Anschlußgruppe LTGB sind jeweils mehrere Teilnehmerleitungseinheiten DLU angeschlossen, die den Verkehr in Richtung der Paketsteuerungseinrichtungen LTGH vorkonzentrieren. An eine Teilnehmerleitungseinheit sind mehrere Teilnehmermodule SLMD angeschlossen, die jeweils wenigstens einen ISDN-Teilnehmer repräsentieren.

Das dargestellte ISDN-fähige Vermittlungssystem EWSD muß bei Bedarf über eine physikalische Wahl-/ oder eine Festverbindung eine logische Verbindung zwischen einem über eine Teilnehmerleitungseinheit DLU an das EWSD-Vermittlungssystem angeschlossenen ISDN-Teilnehmer und einem externen Paketvermittlungssystem EWSP herstellen, das über eine Netzschnittstelle NT an das ISDN-Vermittlungssystem angeschlossen ist.

Die Übertragung der anfallenden Paketdaten zwischen ISDN-Teilnehmer und Paket-Vermittlungssystsem geschieht über ganz normale 64 Kbit/sec-PCM-Kanäle. Die Konzentration der pro Verbindung nur relativ geringen Datenmengen wird zweistufig d.h. zum einen in der DLU (Konzentration von D-Kanälen und B-Kanälen zu wenigstens einem Paket-Kanal Bd-DLU) und zum anderen in der Paketsteuerungseinrichtung (Konzentration der Paketkanäle Bd-DLU zu einem Paket-Kanal Bd-FHM) durchgeführt. Bei den von der Paketsteuerungseinrichtung durchzufuhrenden Aufgaben handelt es sich zum einen um die Konzentration und die Verteilung der Paketdaten und zum anderen um den Verbindungsaufbau und die Signalisierung bzw. Steuerung des Verbindungsaufbaus.

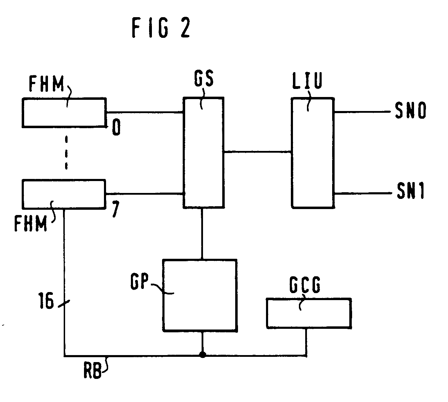

Figur 2 zeigt die Struktur der erfindungsgemäßen Paketsteuerungseinrichtung LTGH. Sie umfaßt einen Gruppenprozessor GP zur Steuerung der Paketsteuerungseinrichtung, mehrere Rahmenbearbeitungsmodule FHM zur Konzentration bzw. Verteilung von Paketdaten, einen zentralen, leistungsfähigen Rechnerbus RB, über den die Rahmenbearbeitungsmodule mit dem Gruppenprozessor verbunden sind und der unter anderem zur Übermittlung von Verbindungssteuerungsnachrichten an den Gruppenprozessor dient, sowie eine Koppeleinrichtung, die einen Gruppenkoppler GS und eine Schnittstelleneinrichtung LIU umfaßt, und die dem Zugang der Paketsteuerungseinrichtung zum zentralen Koppelnetz dient. Der Gruppenprozessor GP ist mit dem Gruppenkoppler GS verbunden und besitzt damit Zugang zum zentralen Koppelnetz. Die Datenkanäle eines Rahmenbearbeitungsmoduls sind direkt an den Gruppenkoppler über 32 x 64 Kbit/sec bzw. 2 Mbit/sec Highways angeschlossen.

Ein Rahmenbearbeitungsmodul führt die Konzentrator- und Verteilfunktion für Paketdaten durch und unterstützt den Verbindungsaufbau von Wahlverbindungen anhand von gewählten Teil-nehmerdaten. Dazu entnimmt der Microprozessor eines Rahmenbearbeitungsmoduls aus den von ihm empfangenen Datenkanälen Signalisierungsnachrichten für den Verbindungsaufbau und gibt diese zur weiteren Verarbeitung, d.h. Steuerung des Verbindungsaufbaus an den Gruppenprozessor. Der Microprozessor erfüllt diese Aufgabe in Zusammenarbeit mit speziellen HDLC-Prozesoren, die Schnittstellenprozessoren zum Gruppenkoppler darstellen.

Die eigentliche Verbindungssteuerung kann bei einer ersten Variante vom Gruppenprozessor selbst durchgeführt werden und in einer zweiten Variante von einem zentralen Verbindungssteuerungsprozessor durchgeführt werden, wobei der Gruppenprozessor bei der zweiten Variante die Verbindungssteuerunsnachrichten über einen entsprechenden Steuerungskanal ohne Bearbeitung an den zentralen Verbindungssteuerungprozessor weiterleitet.

Neben diesen gewählten Verbindungen aus den Teilnehmerdaten, können auch feste Verbindungen (NUC-Verbindungen) eingestellt werden.

Die Konzentrator- und Verteilfunktion wird von einem Rahmenbearbeitungsmodul eigenständig durchgeführt. Der Microprozessor entnimmt aus den von ihm empfangenen Datenkanälen hierzu die Adressierungsinformation aus den Paketnachrichten (genauer gesagt aus dem Header der Paketnachrichten) und verteilt die gesamte Nachricht zu dem ausgewählten Zielkanal. Das Adressierungsschema im Rahmenbearbeitungsmodul ist dabei so festgelegt, daß der Microprozessor aus der Adresse direkt den physikalischen Weg bestimmen kann.

Die Rahmenbearbeitungsmodule werden, wie bereits erwähnt, über einen leistungsfähigen Rechnerbus RB mit 8 Bit bzw. 16 Bit Datenbreite vom Gruppenprozessor GP gesteuert. Der Gruppenprozessor fragt jedes Rahmenbearbeitungsmodul über deren zugehörige Adresse in festen Zeitabstanden ab, ob Verbindungssteuerungsnachrichten vorliegen, bzw. schickt eigene Steuernachrichten zu einem Rahmenbearbeitungsmodul.

Die von einem Rahmenbearbeitungsmodul empfangenen Datenkanäle von jeweils 64 Kbit/sec Übertragungsrate werden einem Rahmenbearbeitungsmodul über jeweils einen Highway von 2 Mbit/sec Übertragungsrate vom Gruppenkoppler GS zugeführt. Über den Gruppenkoppler GS können beliebige, maximal also 32 x 64 Kbit/sec-Kanäle aus dem zentralen Koppelnetz SN kommend, an ein Rahmenbearbeitungsmodul durchgeschaltet werden. Aufgrund der Aufgabenstellung eines Rahmenbearbeitungsmoduls werden diese Einstellungen nur als Festverbindung NUC geschaltet. Die Steuerung des Gruppenkopplers GS und der Schnittstelleneinrichtung LIU erfolgt über eine direkte Verbindung des Gruppenprozessors GP mit dem Gruppenkoppler GS.

Bezüglich des speziellen Vermittlungssystems EWSD besitzt die erfindungsgemäße Paketsteuerungseinrichtung den besonderen Vorteil, daß bisher bereits bekannte Grundfunktionen einer Anschlußgruppe LTGB weiterverwendet werden können und nur eine geringfügige Erweiterung durch mehrere Rahmenbearbeitungsmodule und einen neuen separaten Rechnerbus RB erforderlich ist.

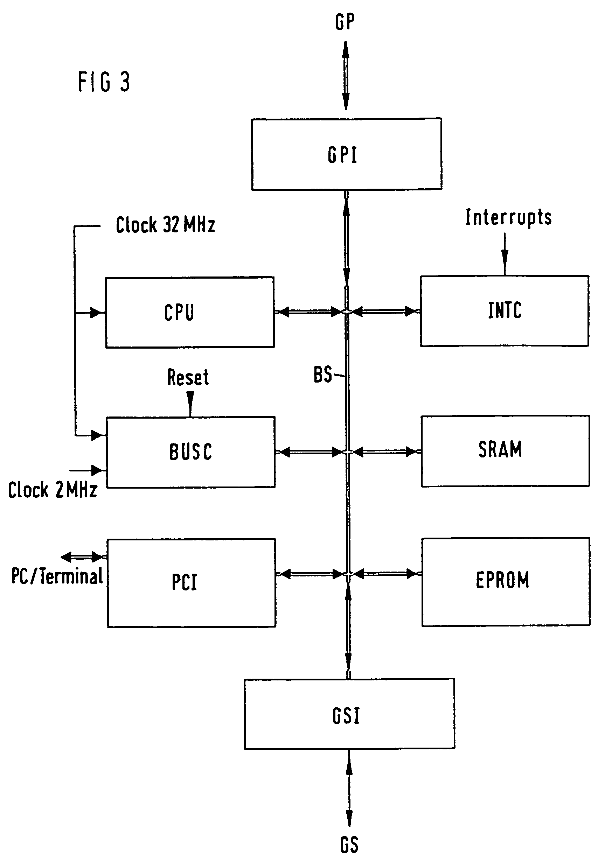

Figur 3 zeigt den Aufbau eines Rahmenbearbeitungsmoduls FHM. Das Rahmenbearbeitungsmodul umfaßt ein internes Bussystem BS, an das ein Microprozessorsystem, bestehend aus einem Microprozessor CPU, einem Interrupt-Controller INTC, einem Bus-Controller BUSC und Speichereinheiten SRAM, EPROM, sowie eine Gruppenprozessorschnittstelle GPI, eine Gruppenkopplerschnittstelle GSI und eine Terminal-Schnittstelle PCI angeschlossen sind. Die Gruppenkopplerschnittstelle GSI umfaßt die bereits genannten HDLC-Prozessoren zur Unterstützung des Microprozessorsystems.

## Patentansprüche

1. Einrichtung zur Steuerung von Paketdaten in einem STM-Vermittlungssystem mit
a) einer Koppeleinrichtung (GS,LIU), über die die genannte Einrichtung (LTGH) mit dem zentralen Koppelnetz (SN) des STM-Vermittlungssystems verbunden ist,
b) einem Gruppenprozessor (GP) zur Steuerung der genannten Einrichtung, der mit der Koppeleinrichtung verbunden ist, und der über das zentrale Koppelnetz Steuerungskanäle zu anderen Steuerungsprozessoren besitzt,
c) einem oder mehreren Rahmenbearbeitungsmodulen (FHM), die jeweils separat an die Koppeleinrichtung angeschlossen sind, die an zentraler Stelle von den Teilnehmern des STM-Vermittlungssystems kommende Paketdaten in Richtung Paket-Vermittlung konzentrieren und von einem Paket-Vermittlungssystem kommende Paketdaten in Richtung Teilnehmer verteilen, wobei die Rahmenbearbeitungsmodule den Headern der Paketdaten zu diesem Zweck entsprechende Adressierungsdaten entnehmen.

2. Einrichtung nach Anspruch 1,
**dadurch gekennzeichnet**,
**daß** die Rahmenbearbeitungsmodule den von den Teilnehmern kommenden Paketdaten Verbindungssteuerungsdaten entnehmen und diese an den Gruppenprozessor zur Durchführung der Verbindungssteuerung weiterleiten.

3. Einrichtung nach Anspruch 2,
**gekennzeichnet** durch
einen Rechnerbus (RB), über den die Rahmenbearbeitungsmodule mit dem Gruppenprozessor verbunden sind und über den die Rahmenbearbeitungsmodule(FHM) die genannten Verbindungssteuerungsnachrichten an den Gruppenprozessor weiterleiten.

4. Einrichtung nach einem der Ansprüche 1 bis 3,
**dadurch gekennzeichnet**,
**daß** es sich bei dem STM-Vermittlungssystem um ein ISDN-fähiges Vermittlungssystem handelt und die Paketdaten von ISDN-Teilnehmern über den B-Kanal und/oder den D-Kanal übertragen werden .

5. Einrichtung nach einem der Anspruche 1 bis 4,
**dadurch gekennzeichnet**,
**daß** ein Rahmenbearbeitungsmodul wenigstens einen HDLC-Processor umfaßt, der das HDLC-Protokoll behandelt, bevor die Paketdaten in einen neuen Sende-Rahmen eingebaut werden.

6. STM-Vermittlungssystem,
**gekennzeichnet durch**
a) mindestens zwei Paketsteuerungseinrichtungen gemäß einem der Ansprüche 1 bis 6,
b) mindestens zwei Teilnehmerleitungseinheiten (DLU), die die Paketdaten in Richtung der Paketsteuerungseinrichtungen vorkonzentrieren, wobei eine Teilnehmerleitungseinheit (DLU) mindestens zwei Paketkanäle (Bd-DLU) zu jeweils unterschiedlichen Paketsteuerungeinrichtungen aufweist.
